# FASCICULE DE BREVET EUROPEEN

(11) **EP 4 182 631 B1**
(45) Date de publication et mention de la délivrance du brevet: **10.04.2024**
(21) Numéro de dépôt: 21746525.1
(22) Date de dépôt: 06.07.2021
(51) Int. Cl.: G01B 9/02, B22F 10/20, B22F 10/85, B22F 12/90, B29C 64/153, B29C 64/268, B29C 64/393, B29C 64/386, B33Y 10/00, B33Y 30/00, B33Y 50/02

(54) **DISPOSITIF DE CONTRÔLE POUR FABRICATION D'UNE PIECE AVEC AJOUT DE MATIERE**
INSPEKTIONSVORRICHTUNG ZUR HERSTELLUNG EINES BAUTEILS UNTER MATERIALZUGABE
INSPECTION DEVICE FOR MANUFACTURING A PART WITH ADDITION OF MATERIAL

(30) Priorité: 20.07.2020 FR 2007572
(43) Date de publication de la demande: 24.05.2023
(73) Titulaire: Office National d'Etudes et de Recherches Aérospatiales, 91120 Palaiseau (FR); Université du Mans, 72085 Le Mans Cedex 09 (FR)
(72) Inventeur: FLEURY, Bruno, 91123 PALAISEAU CEDEX (FR); PICART, Pascal, 72085 LE MANS CEDEX 09 (FR); PINIARD, Matthieu, 91123 PALAISEAU CEDEX (FR); SORRENTE, Béatrice, 91123 PALAISEAU CEDEX (FR)
(74) Mandataire: Plasseraud IP
(86) Numéro de dépôt international: PCT/FR2021/051249
(87) Numéro de publication internationale: WO 2022/018339

(56) Documents cités:
- EP-A1- 3 650 141
- BORDBAR BEHZAD ET AL: "Application of complex field imaging sensor to additive manufacturing", ENHANCED AND SYNTHETIC VISION 2003 : [CONFERENCE ENHANCED AND SYNTHETIC VISION 2002] ; 21 APRIL 2003, ORLANDO, FLORIDA, USA; [PROCEEDINGS OF SPIE ISSN 0277-786X], SPIE, US, vol. 11305, 21 février 2020 (2020-02-21), pages 113050G-113050G, XP060128791, DOI: 10.1117/12.2551453 ISBN: 978-1-5106-3673-6
- ZHAO XIAYUN ET AL: "Experimental validation and characterization of a real-time metrology system for photopolymerization-based stereolithographic additive manufacturing process", THE INTERNATIONAL JOURNAL OF ADVANCED MANUFACTURING TECHNOLOGY, SPRINGER, LONDON, vol. 91, no. 1, 3 décembre 2016 (2016-12-03), pages 1255-1273, XP036244887, ISSN: 0268-3768, DOI: 10.1007/S00170-016-9844-1 [extrait le 2016-12-03]

## Description

### Domaine technique

La présente description concerne un dispositif de fabrication d'une pièce avec ajout de matière, dans lequel la matière qui est destinée à constituer toute ou partie de la pièce est transformée temporairement pour être fixée à la pièce en cours de fabrication.

### Technique antérieure

De nombreux dispositifs sont conçus pour fabriquer des pièces en utilisant des ajouts de matière, la matière étant le plus souvent fondue ou liquéfiée temporairement pour être ajoutée à la pièce en cours de fabrication.

Certains de ces dispositifs de fabrication font partie des moyens de mise en forme appelés couramment «imprimantes 3D». Ils procèdent par des ajouts successifs de matière à une pièce en cours d'élaboration, à des emplacements prédéterminés pour produire la forme finale qui est voulue pour la pièce. Les portions de matière qui sont ajoutées participent à l'élaboration progressive de la pièce, et l'état transitoire de matière fondue ou liquéfiée assure que la pièce qui est finalement obtenue présente une continuité de matière, sans fissures ni défauts susceptibles de provoquer des ruptures ultérieures. Dans les dispositifs d'impression 3D dits SLM, pour «Selective Laser Melting^{®}» en anglais, aussi désignés par LBM pour «Laser Beam Melting» ou fusion sélective produite par laser sur lit de poudre», un récipient est rempli d'une poudre de la matière qui est destinée à constituer la pièce, et cette poudre est fondue localement et sélectivement à des endroits variables dans le récipient, par irradiation avec un faisceau laser, afin de l'agréger pour former la pièce par couches successives. La poudre restante, qui n'a pas été agrégée, est ensuite éliminée pour récupérer la pièce dont l'intégrité dépend des qualités spatio-temporelles de la zone instantanée de fusion de la poudre.

Pour ces procédés de fabrication où de la matière constitutive de la pièce dans son état final est temporairement fondue puis solidifiée à nouveau, la zone de fusion détermine la qualité et les propriétés de la pièce qui est finalement obtenue. Pour certains dispositifs de fabrication, cette zone de fusion, aussi appelée bain de fusion, est située spatialement à un endroit qui est fixe, et la pièce est déplacée progressivement pour poursuivre sa fabrication de proche en proche. Mais dans de nombreux dispositifs de fabrication qui sont utilisés dans l'industrie, notamment à cause de la taille et/ou du poids de la pièce qui est en cours de fabrication, cette pièce reste fixe et c'est l'endroit auquel est amenée l'énergie nécessaire à la fusion temporaire de la matière qui est déplacé. La zone de fusion est alors susceptible d'être déplacée sur des distances qui sont très supérieures à ses propres dimensions au cours de l'élaboration de la pièce. Pour cette raison, des enregistrements d'images qui sont effectués avec un champ optique d'entrée qui est fixe sont peu adaptés pour permettre de surveiller la zone de fusion, car les images présentent alors une résolution spatiale insuffisante à l'intérieur de cette zone de fusion.

En outre, la plupart des techniques d'imagerie qui ont été appliquées pour visualiser une zone de fusion ne fournissent pas une caractérisation tridimensionnelle de sa forme, mais seulement une caractérisation bidimensionnelle. Par exemple, certaines de ces techniques, lorsqu'elles sont appliquées au procédé LBM, ne fournissent que des caractérisations de la zone de fusion qui concernent des dimensions parallèles au lit de poudre. D'autres techniques fournissent une information de hauteur en fonction d'une seule coordonnée dont la valeur peut varier parallèlement au lit de poudre. Parmi ces dernières techniques, on peut citer les techniques TD-OCT, pour «Time-Domain Optical Cohérence Tomography» ou tomographie par cohérence optique dans le domaine temporel, et SD-OCT, pour «Spectral-Domain Optical Cohérence Tomography» ou tomographie par cohérence optique dans le domaine spectral, cette dernière dans sa version ICI, pour « Inline Cohérent Imaging» ou imagerie cohérente selon la direction de visée, et des techniques qui mettent en oeuvre une caméra dont la ligne de visée en parallèle au lit de poudre. Pour toutes ces techniques, il manque au moins une coordonnée par rapport à une caractérisation tridimensionnelle de la surface de la zone de fusion. Or les phénomènes physiques qui génèrent cette forme, tels que des comportements de mouillage et la diffusion thermique, sont tridimensionnels par nature.

L'article qui est intitulé «Application of Complex Field Imaging Sensor to Additive Manufacturing» de Behzad Bordbar et al., Ultra-High-Definition Imaging Systems III, Proc. of SPIE, Vol. 11305, pp. 113050G-1 to 113050G-9, 21 février 2020, propose d'utiliser la technique d'holographie numérique à plusieurs longueurs d'onde pour mesurer la topographie d'une zone de fusion.

L'article qui est intitulé «Experimental validation and characterization of a real-time metrology system for photopolymerization-based stereolithographic additive manufacturing process» de Xiayun Zhao et al., The International Journal of Advanced Manufacturing Technology, Vol. 91, N° 1, pp. 1255-1273, 3 décembre 2016, présente une technique interférométrique pour contrôler la polymérisation d'une couche de résine.

Enfin, le document EP 3 650 141 A1 décrit un système de surveillance de fabrication additive sur lit de poudre dans lequel le dispositif de surveillance utilise un trajet optique qui est aussi utilisé par le laser de fusion.

### Problème technique

A partir de cette situation, un but de la présente invention est de visualiser simplement et efficacement la zone de fusion, ou plus généralement la zone de transformation de la matière, d'un procédé de fabrication de pièces par ajout de matière, notamment un procédé de fabrication par impression 3D. Plus précisément, l'invention a pour but de fournir une représentation tridimensionnelle de la zone de transformation, en temps réel pendant que chaque pièce est fabriquée, et avec une résolution temporelle suffisante.

Un autre but de l'invention est de fournir une technique de contrôle d'un procédé de fabrication qui puisse être mis en oeuvre in-situ, c'est-à-dire de façon intégrée au dispositif de fabrication.

Un autre but encore de l'invention est de fournir une telle représentation tridimensionnelle avec une résolution spatiale suffisante, selon trois directions perpendiculaires, pour permettre un diagnostic des conditions instantanées de fabrication de la pièce.

### Résumé de l'invention

Pour atteindre l'un au moins de ces buts ou un autre, l'invention propose un nouveau dispositif de fabrication d'une pièce avec ajout de matière, dans lequel des moyens d'apport d'énergie sont adaptés pour transformer une quantité de matière à ajouter sur la pièce en cours de fabrication, dans une zone de transformation de la matière qui est effective à un instant où la quantité de matière est fixée sur la pièce. Selon l'invention, ce dispositif de fabrication comprend des moyens optiques de contrôle pour fournir au moins une représentation de la zone de transformation en temps réel pendant que la pièce est fabriquée. Ces moyens optiques de contrôle comprennent eux-mêmes :
- au moins une source lumineuse de contrôle, qui est adaptée pour produire un faisceau lumineux de contrôle ;
- un capteur matriciel d'images ;
- un diviseur de faisceau, qui est disposé pour diviser le faisceau lumineux de contrôle en un faisceau d'éclairage et un faisceau de référence ;
- un chemin optique d'éclairage, qui relie le diviseur de faisceau à la zone de transformation, continuellement pendant que la pièce est fabriquée, et qui est destiné au faisceau d'éclairage ;
- un chemin optique de référence, qui relie le diviseur de faisceau au capteur matriciel d'images, continuellement pendant que la pièce est fabriquée, et qui est destiné au faisceau de référence ; et
- un chemin optique de transfert, qui relie la zone de transformation au capteur matriciel d'images, continuellement pendant que la pièce est fabriquée, et qui est destiné à un rayonnement rétrodiffusé produit par le faisceau d'éclairage lorsqu'il est incident sur la zone de transformation, ce chemin optique de transfert étant adapté pour que le rayonnement rétrodiffusé forme une image de la zone de transformation sur le capteur matriciel d'images.
Ces moyens optiques de contrôle sont disposés de sorte que le capteur matriciel d'images produise, à chaque séquence de lecture de ce capteur, des données de lecture qui correspondent à une superposition du rayonnement rétrodiffusé transmis par le chemin optique de transfert avec le faisceau de référence transmis par le chemin optique de référence.

Selon une première caractéristique de l'invention, chaque source lumineuse de contrôle est une source laser, et les données de lecture du capteur matriciel d'images, pour chaque séquence de lecture de celui-ci, forment une image holographique de la zone de transformation qui est relative à un instant pendant que la pièce est fabriquée.

Selon une seconde caractéristique de l'invention, les moyens optiques de contrôle comprennent en outre au moins un processeur qui est adapté pour exécuter un algorithme d'extraction d'une répartition bidimensionnelle de phase à partir de l'image holographique, et de conversion de cette répartition bidimensionnelle de phase en des valeurs numériques qui caractérisent une topographie de la zone de transformation. Cette caractérisation de topographie constitue une représentation tridimensionnelle de la zone de transformation. Les valeurs numériques qui sont obtenues pour caractériser la topographie de la zone de transformation peuvent être des valeurs de hauteur, aussi appelées valeurs sagittales, d'une surface de cette zone. Autrement dit, l'algorithme réalise une conversion de phase dans chaque image holographique qui est saisie, et identifie des écarts de phase à des variations sagittales qui existent entre des points différents de la zone de transformation. De cette façon, une information tridimensionnelle est fournie par le dispositif de l'invention à chaque cycle de saisie d'image par le capteur matriciel, simultanément pour de multiples points de la zone de transformation. Des représentations tridimensionnelles de la zone de transformation sont ainsi recueillies pendant que la pièce est fabriquée, à une fréquence qui peut être suffisamment élevée pour permettre une surveillance et un diagnostic précis des conditions de fabrication.

De préférence, le chemin optique d'éclairage peut être adapté en outre pour que, au niveau de la zone de transformation, la section du faisceau d'éclairage soit plus grande que la zone de transformation. Dans ce cas, et lorsque l'image holographique possède un champ optique d'entrée qui contient cette zone de transformation, chaque image holographique qui est saisie peut représenter toute la zone de transformation. Une surveillance et un diagnostic complet des conditions de fabrication de la pièce en résultent.

Le dispositif de fabrication de l'invention est de type fabrication additive par fusion sélective produite par laser sur lit de poudre, ou LBM. Dans ce dispositif de fabrication, les moyens d'apport d'énergie comprennent un laser de fusion et une optique de focalisation adaptée pour focaliser sur la zone de transformation un faisceau laser de fusion qui est produit par le laser de fusion. De cette façon, un bain de fusion est formé sélectivement dans la zone de transformation à partir d'une poudre de la matière qui est destinée à constituer la pièce.

Le dispositif de l'invention étant de type LBM, une partie au moins de l'optique de focalisation est disposée sur une portion commune au chemin optique d'éclairage et au chemin optique de transfert, de sorte que le faisceau d'éclairage soit incident sur la zone de transformation après avoir traversé cette partie d'optique de focalisation. Simultanément, le rayonnement rétrodiffusé traverse la partie d'optique de focalisation en direction du capteur matriciel d'images. Ainsi, le faisceau optique d'éclairage et le rayonnement qui est rétrodiffusé en provenance de la zone de transformation partagent une même portion de chemin optique, et la partagent aussi avec le faisceau laser de fusion. Une diminution du nombre de composants optiques en résulte, permettant de réduire l'encombrement à proximité du bain de fusion, et réduire ainsi des perturbations que pourraient causer des composants qui sont proches de cette zone.

Avantageusement, la partie d'optique de focalisation qui est disposée sur la portion commune au chemin optique d'éclairage et au chemin optique de transfert peut comprendre un module optique de balayage bidimensionnel, de sorte que le faisceau laser de fusion, le faisceau d'éclairage et le rayonnement rétrodiffusé soient déviés simultanément par ce module optique de balayage bidimensionnel. De cette façon, le champ optique de l'image holographique peut être limité à des dimensions similaires ou peu supérieures à celles de la zone de transformation, c'est-à-dire celles du bain de fusion pour un procédé LBM. Ainsi, une résolution spatiale supérieure peut être obtenue dans chaque image holographique pour la zone de transformation, même si cette zone se déplace au cours de la fabrication de la pièce.

De façon plus avantageuse, lorsque le dispositif de l'invention est de type LBM, la partie d'optique de focalisation qui est disposée sur la portion commune au chemin optique d'éclairage et au chemin optique de transfert peut comprendre en outre un module optique à distance de focalisation variable, ou DFM pour «Dynamic Focus Module». Ce module DFM peut alors être situé en amont du module optique de balayage bidimensionnel pour le faisceau laser de fusion et le faisceau d'éclairage, et être effectif simultanément pour le faisceau laser de fusion, le faisceau d'éclairage et le rayonnement rétrodiffusé. Un tel module DFM permet de conserver une image holographique qui est nette ou suffisamment nette lorsque l'éloignement de la zone de transformation varie lors du déplacement de cette zone de transformation que produit le module optique de balayage bidimensionnel.

De façon générale, le chemin optique de transfert peut comprendre au moins une première lentille convergente et une seconde lentille convergente, qui sont disposées pour être traversées successivement par le rayonnement rétrodiffusé qui est produit par le faisceau d'éclairage lorsque ce dernier est incident la zone de transformation, et de sorte que le foyer image de la première lentille convergente soit superposé au foyer objet de la seconde lentille convergente. L'ajout de ces lentilles permet, par déplacement de l'une par rapport à l'autre, de compenser facilement une éventuelle défocalisation résiduelle des moyens optiques de contrôle, notamment un défaut de focalisation qui subsisterait par rapport à l'efficacité du module DFM lorsqu'un tel module DFM est utilisé. Eventuellement, une défocalisation du module DFM peut être appliquée volontairement, par exemple pour que le faisceau d'éclairage illumine un environnement plus large autour de la zone de transformation. Dans ce cas, les deux lentilles convergentes ajoutées sur le chemin optique de transfert peuvent permettre de compenser une telle défocalisation volontaire, afin que l'image qui est saisie par le capteur matriciel reste nette. Enfin, l'ajout des deux lentilles convergentes peut aussi permettre d'ajuster facilement la pupille des moyens optiques de contrôle, notamment en disposant un diaphragme en aval de ces deux lentilles selon le sens de propagation du rayonnement rétrodiffusé dans le chemin optique de transfert.

Aussi de façon générale pour l'invention, le chemin optique de transfert peut avantageusement comprendre un filtre adapté pour transmettre le rayonnement rétrodiffusé qui est produit par le faisceau d'éclairage lorsqu'il est incident sur la zone de transformation, sélectivement par rapport à du rayonnement thermique qui est émis par la zone de transformation. Un tel filtre peut augmenter un contraste des images holographiques.

De façon générale pour l'invention, le faisceau de référence et le rayonnement rétrodiffusé peuvent former une configuration d'holographie numérique dans un plan d'image, telle que couramment désignée par DIPH, pour «Digital Image-Plane Holography» en anglais. Une telle configuration permet d'ajuster avantageusement un grandissement optique qui est effectif entre la zone de transformation et le capteur matriciel d'images. En outre, le faisceau de référence peut avoir une configuration de faisceau collimaté au niveau du capteur matriciel d'images.

Lorsqu'une configuration DIPH est ainsi mise en oeuvre, le faisceau de référence et une direction centrale de propagation du rayonnement rétrodiffusé peuvent avantageusement former un angle non-nul au niveau du capteur matriciel d'images. Une telle configuration est dite hors d'axe, ou «off-axis» en anglais. Alors, l'algorithme qui est exécuté par le processeur peut être adapté pour caractériser la topographie de la zone de transformation à partir d'au moins une valeur d'ordre holographique choisie entre +1 ou -1. La valeur d'ordre holographique égale à 0 est exclue pour obtenir cette caractérisation topographique. De préférence, une seule des valeurs d'ordre holographique +1 et -1 est utilisée, mais une utilisation des deux valeurs +1 et -1 est possible.

Toutefois, en fonction de la topographie de la zone de transformation, sa caractérisation par l'invention peut être rendue plus difficile ou être perturbée par les deux causes suivantes :
- la surface de la zone de transformation peut présenter des variations sagittales, produisant des variations de distance d'éloignement, qui sont supérieures à la moitié de la longueur d'onde de la source lumineuse de contrôle utilisée. Il en résulte un repliement des valeurs de phase qui sont extraites de l'image holographique, et une nécessité de mettre en oeuvre une opération de déroulement de phase ; et
- la surface de la zone de transformation peut présenter une rugosité importante, qui produit des tavelures, ou «speckle» en anglais, et dégrade la caractérisation topographique qui est obtenue.

Le perfectionnement suivant de l'invention, facultatif, peut permettre de remédier à au moins l'une de ces deux difficultés. Pour ce perfectionnement, les moyens optiques de contrôle peuvent comprendre au moins deux sources lumineuses de contrôle, qui sont formées par des sources laser respectives ayant des longueurs d'onde différentes mais avec un écart entre elles inférieur à 2% de chacune de ces deux longueurs d'onde. Les moyens optiques de contrôle sont alors disposés de sorte que les deux sources lumineuses de contrôle éclairent simultanément la zone de transformation. Chaque source lumineuse de contrôle est associée à un chemin optique de référence respectif, et des chemins optiques de transfert sont fonctionnels simultanément pour les deux sources lumineuses de contrôle entre la zone de transformation et le capteur matriciel d'images. De préférence, les deux sources lumineuses de contrôle peuvent partager le même chemin optique de transfert. Avantageusement, elles peuvent aussi partager une même portion finale du chemin optique d'éclairage, notamment une telle portion finale du chemin optique d'éclairage qui est aussi partagée avec le faisceau laser de fusion pour un dispositif de type LBM. Dans ce cas, la portion finale du chemin optique d'éclairage qui est commune aux deux sources lumineuses de contrôle peut comprendre le module optique de balayage bidimensionnel, ainsi que le module DFM le cas échéant.

Selon ce perfectionnement, l'algorithme qui est exécuté par le processeur est adapté en outre pour isoler dans l'image holographique, des composantes d'image qui sont formées chacune par le rayonnement rétrodiffusé et le faisceau de référence provoqués par une même des deux sources lumineuses de contrôle, une composante d'image séparément pour chaque source lumineuse de contrôle. Les deux composantes d'image qui sont ainsi isolées correspondent à une même valeur d'ordre holographique qui est égale à +1 ou -1. L'algorithme est alors aussi adapté pour extraire, pour chacun d'une multitude de points d'image de l'image holographique, deux valeurs de phases séparément à partir des deux composantes d'image isolées, puis calculer une différence entre les deux valeurs de phases pour chaque point d'image, et caractériser la topographie de la zone de transformation associant les résultats des différences de valeurs de phases à une valeur de longueur d'onde synthétique qui est égale au produit des deux longueurs d'onde des sources lumineuses de contrôle, divisé par la valeur absolue de la différence entre ces deux longueurs d'onde. Cette valeur de longueur d'onde synthétique peut être grande, de sorte que la caractérisation topographique de la zone de transformation qui lui est associée est moins sensible aux variations sagittales abruptes qui peuvent exister dans la surface de la zone de transformation, en comparaison avec les caractérisations topographiques qui peuvent être obtenues séparément pour l'une et l'autre des longueurs d'onde respectives des deux sources lumineuses de contrôle. Pour cette raison, la caractérisation topographique qui est obtenue pour la valeur de longueur d'onde synthétique présente moins de tavelures. La grande valeur de la longueur d'onde synthétique peut aussi éviter la nécessité de dérouler les résultats des différences de valeurs de phases. Pour cela, les longueurs d'onde respectives des deux sources lumineuses de contrôle peuvent préférablement présenter entre elles un écart qui est inférieur à 1%, voire inférieur à 0,5%, de chacune des longueurs d'onde de ces deux sources.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est un diagramme synoptique d'un dispositif de fabrication conforme à l'invention, à une seule source lumineuse de contrôle ;
[Fig. 2] montre un exemple de constitution pour un chemin optique de transfert, tel que pouvant être utilisé dans le dispositif de [Fig. 1] ;
[Fig. 3] correspond à [Fig. 1] pour des perfectionnements de l'invention à deux sources lumineuses de contrôle ; et
[Fig. 4] correspond à [Fig. 3] pour une réalisation de l'invention avec des fibres optiques.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

De façon générale, des moyens de contrôle de polarisation peuvent être utilisés dans les modes de réalisation de l'invention qui sont décrits ci-dessous, pour produire les interférences dont résultent les images holographiques saisies. D'autres moyens de contrôle de polarisation sont aussi incorporés de façon usuelle dans chaque dispositif de séparation par polarisation qui est utilisé. Mais étant donné que de tels moyens de contrôle de polarisation sont tous bien connus de l'Homme du métier, ils ne sont pas décrits dans la suite par souci de clarté.

De même, des moyens d'élargissement des sections des faisceaux lumineux peuvent aussi être utilisés, d'une des façons qui sont encore connues de l'Homme du métier, et qui ne seront donc pas décrites non plus.

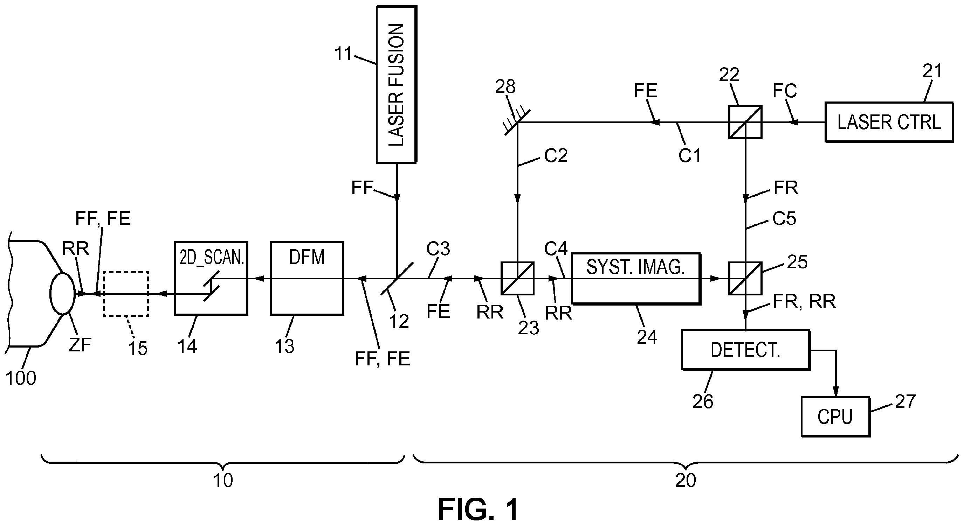

Un dispositif de fabrication additive, tel que communément désigné par imprimante 3D, qui est conforme à l'invention est décrit maintenant. Plus précisément, l'invention est décrite dans le cas d'un dispositif de type LBM. Conformément à [Fig. 1], ce dispositif comprend l'appareil de fabrication LBM, qui est désigné globalement par la référence 10, et des moyens optiques de contrôle, qui sont ajoutés par l'invention et désignés globalement par la référence 20.

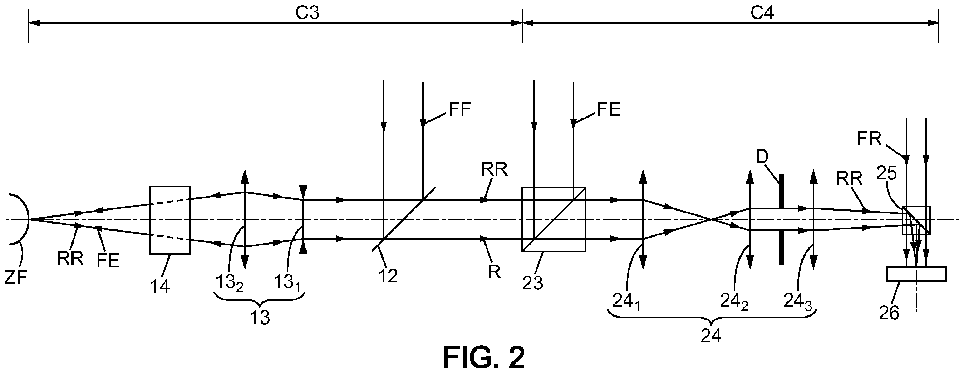

De façon connue, l'appareil 10 comprend une source laser de puissance 11, qui est notée LASER FUSION et produit un faisceau laser de fusion FF. Par exemple, la source 11 peut être un laser à fibre dopée à l'ytterbium, qui produit le faisceau de fusion FF avec une puissance de sortie élevée et une longueur d'onde de 1064 nm (nanomètre), ou 1070 nm. D'autres types de laser peuvent être utilisés alternativement pour la source 11, par exemple pour produire le faisceau de fusion FF avec une valeur de longueur d'onde égale à 532 nm, en fonction de caractéristiques d'absorption de la matière à fondre. Le faisceau de fusion FF est dirigé sur une pièce en cours de fabrication, désignée par la référence 100. Pour sa fabrication, des portions de matière sont progressivement ajoutées à la pièce 100, en étant fondues aux endroits de la pièce 100 auxquels ces portions de matière doivent être ajoutées. Pour cela, un bain de fusion de la matière est généré localement par le faisceau de fusion FF, dont résulte l'accrochage des portions de matière ajoutées sur la partie de la pièce 100 qui a déjà été fabriquée. De façon plus générale, le bain de fusion constitue une zone de transformation de la matière, qui est désignée par la référence ZF. L'endroit sur la pièce 100 en cours de fabrication auquel la matière est ajoutée est sélectionné en utilisant un module optique de balayage bidimensionnel 14, noté 2D-SCAN. Deux configurations optiques peuvent être utilisées alternativement pour ajuster la distance de focalisation du faisceau de fusion FF selon sa direction de propagation. Ainsi, le faisceau de fusion FF est maintenu focalisé sur la surface de la zone de transformation ZF pour chaque endroit de la pièce en cours de fabrication auquel de la matière est ajoutée sélectivement à un instant donné. Dans la première configuration, un module optique à distance de focalisation variable 13, noté DFM pour «Dynamic Focus Module» en anglais, est ajouté sur le trajet du faisceau de fusion FF, en amont du module optique de balayage bidimensionnel 14 par rapport au sens de propagation du faisceau de fusion FF. Toutes les figures annexées correspondent à cette première configuration. Dans la seconde configuration, un module optique à lentille F-Thêta, ou un module optique qui incorpore une lentille à champ plat, ou «Flat field» en anglais, est placé sur le trajet du faisceau de fusion FF en aval du module optique de balayage bidimensionnel 14. L'un ou l'autre de ces modules à lentille F-Thêta ou à champ plat est indiqué par la référence 15 dans [Fig. 1]. L'utilisation d'une lentille F-Thêta peut simplifier la commande du module optique de balayage bidimensionnel 14 par rapport au cas de l'utilisation d'une lentille à champ plat. Les modules 13 et 14, ou 14 et 15 selon la configuration utilisée, forment ensemble l'optique de focalisation au sens de la partie générale de la présente description. Mais, la première configuration, qui combine le module optique à distance de focalisation variable 13 avec le module optique de balayage bidimensionnel 14, peut être préférée car son efficacité simultanément pour plusieurs longueurs d'onde, c'est-à-dire pour la longueur d'onde du faisceau de fusion FF et aussi pour au moins un faisceau d'éclairage et du rayonnement rétrodiffusé qui est produit par ce faisceau d'éclairage, comme décrit dans la suite, est facilitée par le fait que tous ces faisceaux restent sur l'axe optique. La présente description est poursuivie pour une telle première configuration. Le module optique de balayage bidimensionnel 14 peut être d'un modèle à deux miroirs galvanométriques. Le module optique à distance de focalisation variable 13 peut comprendre un doublet optique constitué par une lentille divergente 13₁ suivie par une lentille convergente 13₂ (voir [Fig. 2]), selon le sens de propagation du faisceau de fusion FF. La lentille divergente 13₁ est alors déplacée le long de l'axe optique pour ajuster la distance à laquelle le faisceau de fusion FF est focalisé, dans le volume disponible pour la pièce 100 qui est en cours de fabrication. Typiquement, la zone de transformation ZF peut avoir une taille d'environ 0,5 mm (millimètre) selon chacune de trois directions spatiales orthogonales, pour une pièce 100 qui peut posséder des dimensions de quelques millimètres à plusieurs dizaines de centimètres selon chaque direction.

Conformément à l'invention, l'appareil de fabrication 10 est complété avec les moyens optiques de contrôle 20, qui sont adaptés pour caractériser la topographie de la zone de transformation ZF en en fournissant une représentation tridimensionnelle. Selon une configuration préférée pour réaliser l'invention, ces moyens optiques de contrôle 20 sont agencés pour éclairer la zone de transformation ZF et pour collecter un rayonnement qui est rétrodiffusé par celle-ci selon des trajets optiques d'éclairage et de transfert qui sont tous les deux superposés au trajet optique du faisceau de fusion FF, à travers les modules 13 et 14 . Pour cela, ces modules 13 et 14 sont conçus pour être effectifs simultanément à la longueur d'onde de la source laser de puissance 11, et à au moins une autre longueur d'onde d'un rayonnement qui est utilisé par les moyens optiques de contrôle 20. Une telle configuration permet aux moyens optiques de contrôle 20 de garder la zone de transformation ZF à l'intérieur de leur champ optique d'imagerie, malgré les déplacements de la zone de transformation ZF qui sont produits par le module 14, et tout en conservant une valeur de grandissement d'imagerie et une résolution spatiale qui soient suffisantes.

Les moyens optiques de contrôle 20 comprennent au moins une source lumineuse de contrôle, qui est une source laser 21 et est notée LASER CTRL dans les figures. La source laser de contrôle 21 possède un spectre d'émission qui est différent, et de préférence disjoint, de celui de la source laser de puissance 11. Par exemple, la source laser de contrôle 21 peut être adaptée pour produire un faisceau laser de contrôle FC qui possède une longueur d'onde égale à 632 nm environ.

Le faisceau laser de contrôle FC est divisé en deux parties, par exemple en utilisant un premier diviseur de faisceau, qui peut être un dispositif de séparation par polarisation 22, ou «polarization beam splitter» en anglais. Une première partie du faisceau laser de contrôle FC qui est ainsi générée, constitue un faisceau d'éclairage FE. Ce faisceau d'éclairage FE est amené pour être superposé avec le faisceau de fusion FF en amont du module 13, par exemple en utilisant une lame dichroïque 12. Le faisceau d'éclairage FE est alors transmis par les modules 13 et 14 jusqu'à la zone de transformation ZF conjointement avec le faisceau de fusion FF, puis rétrodiffusé par cette zone ZF sans changement de valeur de longueur d'onde. Le rayonnement qui est ainsi rétrodiffusé, noté RR, est transmis en retour par le module 14, puis 13, et est séparé du faisceau de fusion FF par la lame dichroïque 12, et ensuite séparé du faisceau d'éclairage FE par un deuxième dispositif de séparation par polarisation 23. Le rayonnement RR traverse alors un système imageur 24, qui est noté SYST. IMAG. et conçu pour former une image de la zone de transformation ZF sur un capteur matriciel d'images 26, noté DETECT. Le système imageur 24 assure la conjugaison optique de la surface photosensible du capteur matriciel d'images 26 avec la zone de transformation ZF, en combinaison avec le module 13 et compte tenu de la déviation de balayage qui est produite par le module 14.

De préférence, le faisceau d'éclairage FE éclaire simultanément toute la zone de transformation ZF. Autrement dit, le faisceau d'éclairage FE possède une section au niveau de la zone de transformation ZF, qui est plus grande que cette dernière.

Une seconde partie du faisceau laser de contrôle FC, qui est séparée du faisceau d'éclairage FE par le dispositif de séparation par polarisation 22, constitue un faisceau de référence, noté FR. Ce faisceau de référence FR est superposé au rayonnement rétrodiffusé RR par un dispositif de séparation par division d'amplitude 25, tel qu'une lame semi-réfléchissante ou un cube semi-réfléchissant. De cette façon, l'image qui est formée sur le capteur matriciel 26 est une image holographique, dans laquelle les variations d'intensité lumineuse contiennent des informations de phase. L'image holographique résulte d'une interférence, au niveau du capteur matriciel d'images 26, entre le faisceau de référence FR et le rayonnement rétrodiffusé RR.

Eventuellement, un ou plusieurs miroir(s) de renvoi 28 peut (peuvent) être utilisé(s) en outre pour déterminer le trajet optique de l'un au moins parmi le faisceau d'éclairage FE, le rayonnement rétrodiffusé RR et le faisceau de référence FR. Conformément à [Fig. 2], le système imageur 24 peut être constitué par trois lentilles convergentes 24₁-24₃ qui sont disposées en série entre les dispositifs de séparation 23 et 25. A partir du dispositif de séparation par polarisation 23 et selon le sens de propagation du rayonnement rétrodiffusé RR, les lentilles convergentes 24₁ et 24₂ peuvent être espacées entre elles de sorte que le foyer image de la lentille 24₁ soit proche du foyer objet de la lentille 24₂. La lentille 24₃ possède une valeur de distance focale telle que son plan focal image soit superposé approximativement à la surface photosensible du capteur matriciel d'images 26. Avec une telle constitution du système imageur 24, il est possible de mettre au point précisément l'image qui est saisie par le capteur matriciel 26, en fonction de l'éloignement réel de la zone de transformation ZF, en déplaçant longitudinalement la lentille 24₂. De cette façon, un défaut résiduel de focalisation d'image peut être corrigé facilement, par rapport au fonctionnement du module 13. Une défocalisation du module 13 qui est appliquée volontairement peut aussi être compensée par une position longitudinale adéquate de la lentille 24₂. De tels ajustements de la focalisation qui sont réalisés à l'aide de la lentille 24₂ sont de préférence effectués avant le début de la fabrication de la pièce 100, puis maintenus au cours de sa fabrication. En outre, le système imageur 24 permet d'ajuster facilement la pupille d'imagerie, par exemple en plaçant un diaphragme D entre les lentilles 24₂ et 24₃, si une telle pupille n'est pas déterminée par ailleurs. Enfin, le système imageur 24 procure une configuration DIPH. Un des avantages d'une telle configuration est de permettre d'ajuster la taille apparente de la zone de transformation ZF à l'intérieur de chaque image holographique.

Dans [Fig. 1], C1 et C2 désignent des portions du trajet optique qui sont suivies par le faisceau d'éclairage FE, respectivement entre le dispositif de séparation par polarisation 22 et le miroir de renvoi 28, et entre ce miroir de renvoi 28 et le dispositif de séparation par polarisation 23. C3 désigne la portion de trajet optique entre le dispositif de séparation par polarisation 23 et la zone de transformation ZF. C4 désigne la portion de trajet optique qui est suivie par le rayonnement rétrodiffusé RR entre le dispositif de séparation par polarisation 23 et le capteur matriciel d'images 26. Enfin, C5 désigne la portion de trajet optique suivie par le faisceau de référence FR entre le dispositif de séparation par polarisation 22 et le capteur matriciel d'images 26. La corrélation avec la terminologie utilisée dans la partie générale de la présente description est alors la suivante :
- les portions de trajet optique C1, C2 et C3 forment ensemble le chemin optique d'éclairage, qui est suivi par le faisceau d'éclairage FE en direction de la zone de transformation ZF ;
- les portions de trajet optique C3 et C4 forment ensemble le chemin optique de transfert, qui est suivi par le rayonnement rétrodiffusé RR à partir de la zone de transformation ZF ; et
- la portion de trajet optique C5 forme le chemin optique de référence, qui est suivi par le faisceau de référence FR.
La portion de trajet optique C3 est ainsi commune au chemin optique d'éclairage et au chemin optique de transfert, et aussi au faisceau de fusion FF.

Le faisceau d'éclairage FE peut avoir une configuration de faisceau collimaté dans les portions de trajet optique C1, C2 et C3 jusqu'au module optique à distance de focalisation variable 13. Le rayonnement rétrodiffusé RR peut aussi avoir une configuration de faisceau collimaté entre la lame dichroïque 12 et le dispositif de séparation par polarisation 23. Enfin, le faisceau de référence FR peut de même avoir une configuration de faisceau collimaté dans la portion de trajet optique C5.

La lame dichroïque 12 peut remplir la fonction complémentaire de filtrer le rayonnement rétrodiffusé RR à transmettre en direction du capteur matriciel d'images 26, sélectivement par rapport à du rayonnement thermique qui peut aussi provenir de la zone de transformation ZF. Ainsi, les images holographiques qui sont saisies par le capteur matriciel 26 ne sont pas polluées par le rayonnement thermique.

[Fig. 2] montre les composants du chemin optique de transfert qui ont été énumérés précédemment. Ces composants sont avantageusement sélectionnés pour que chaque image holographique qui est saisie par le capteur matriciel 26 contienne toute la zone de transformation ZF.

Les variations de phase qui sont contenues dans chaque image holographique correspondent à des variations de la distance d'éloignement à laquelle se trouvent des points différents de la surface de la zone de transformation ZF, par rapport au module 13 à travers le module 14. Lorsqu'il est souhaitable de faire apparaître avec plus de précision dans chaque image holographique qui est saisie, des portions de la surface de la zone de transformation ZF qui sont situées sensiblement à distance d'éloignement constante, il est possible d'incliner la direction de propagation du faisceau de référence FR dans la portion de trajet optique entre le dispositif de séparation par division d'amplitude 25 et le capteur matriciel d'images 26, par rapport à la direction centrale de propagation du rayonnement rétrodiffusé RR.

L'analyse de chaque image holographique qui est saisie par le capteur matriciel 26 est effectuée par un processeur 27, qui est noté CPU dans les figures. Alternativement, un processeur de type GPU peut être utilisé. D'une façon connue, l'algorithme d'une telle analyse comprend notamment les étapes suivantes :
/1/ extraction de valeurs de phase par traitement numérique des variations d'intensité qui sont contenues dans chaque image holographique : une valeur de phase est ainsi affectée à chaque point d'image ;
/2/ conversion de chaque valeur de phase en une valeur de distance d'éloignement de la surface de la zone de transformation ZF, puis en une valeur sagittale pour cette surface ;
/3/ conversion des deux coordonnées cartésiennes de l'image holographique en valeurs de coordonnées cartésiennes définies dans le champ optique d'entrée, au niveau du lit de poudre et perpendiculairement à l'axe optique de la portion de trajet optique C3 ; puis
/4/ construction d'une représentation tridimensionnelle de la zone de transformation ZF en associant, pour chaque point d'image de l'image holographique en cours d'analyse, les valeurs des coordonnées cartésiennes dans le champ optique d'entrée avec la valeur sagittale.

Une telle analyse d'image holographique peut être effectuée très rapidement par le processeur 27. Il est ainsi possible d'obtenir une séquence temporelle qui est constituée de plusieurs représentations tridimensionnelles successives de la zone transformation ZF, en temps réel pendant que la pièce 100 est fabriquée.

Couramment, l'étape /1/ peut être effectuée en appliquant d'abord une transformation de Fourier bidimensionnelle à l'image holographique telle que saisie par le capteur matriciel 26, par rapport aux deux coordonnées cartésiennes de cette image. Une telle transformation fait usuellement apparaître trois composantes dans l'image transformée :
- une composante d'ordre zéro, qui correspond à l'intensité moyenne du faisceau de référence FR et du rayonnement rétrodiffusé RR, avec des contributions éventuelles de rayonnements incohérents pouvant exister à la même valeur de longueur d'onde que la source laser de contrôle 21 ;
- une composante dite d'ordre 1, qui contient l'information d'image holographique, et qui reproduit la forme tridimensionnelle de la surface de la zone de transformation ZF ; et
- une composante dite d'ordre -1, qui correspond à la composante d'ordre 1 par une opération de symétrie d'espace et par une opération de conjugaison complexe.
Seule l'une parmi les composantes d'ordre 1 ou -1 est utile. Dans l'image transformée, les trois composantes d'ordre 0, +1 et -1 apparaissent sous forme de lobes distincts. L'un des lobes qui correspond à la composante d'ordre 1, ou -1, est filtré à l'exclusion du lobe qui correspond à l'autre des composantes d'ordre 1 et -1, et aussi à l'exclusion du lobe qui correspond à la composante d'ordre 0. Une transformation de Fourier bidimensionnelle inverse est alors appliquée à l'image transformée et filtrée, c'est-à-dire réduite à l'unique lobe sélectionné. Une nouvelle image est ainsi obtenue, qui attribue une valeur d'amplitude complexe à chaque point d'image identifié par les deux valeurs de coordonnées cartésiennes. Les valeurs de phase de cette amplitude complexe, modulo 2π, sont alors extraites de la nouvelle image, pour tous les points d'image. Elles sont converties en variations de valeur sagittale pour obtenir une caractérisation topographique de la zone de transformation ZF, selon la formule : Δh=λ·Δϕ/(4·π·cosθ), où Δh est la variation de valeur sagittale entre deux points d'image, λ est la longueur d'onde de la source laser de contrôle 21, Δϕ est la variation de phase qui est lue dans la nouvelle image entre les deux points d'image, et θ est l'angle entre la direction du faisceau d'éclairage FE et la direction qui est perpendiculaire à un plan de référence utilisé pour déterminer les variations de hauteur sagittale. Ce plan de référence coïncide avec la surface du lit de poudre dans l'appareil de fabrication LBM.

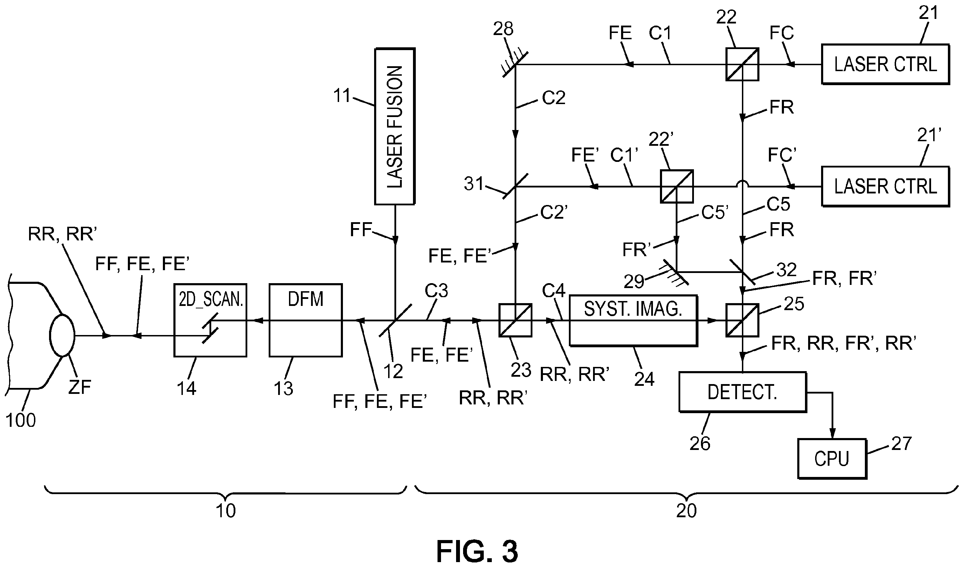

Toutefois, la conversion des valeurs de phase en variations de valeur sagittale peut nécessiter d'opérer un déroulement des valeurs de phase lorsque la zone de transformation ZF présente des variations de valeur sagittale qui sont supérieures à la moitié de la valeur de longueur d'onde utilisée. Or une telle opération de déroulement peut être difficile. De plus, la représentation tridimensionnelle de la zone de transformation ZF qui est obtenue est souvent affectée de tavelures, ou «speckle». Ces tavelures sont dues à une rugosité qui est présente à la surface de la zone de transformation ZF. Pour réduire ou supprimer l'un au moins de ces inconvénients, il est possible d'utiliser un dispositif de fabrication qui est conforme à [Fig. 3]. Par rapport au dispositif de [Fig. 1], une seconde source lumineuse de contrôle a été ajoutée. Cette seconde source lumineuse de contrôle est constituée par une autre source laser 21', qui possède une longueur d'onde d'émission différente de celle de la source laser 21. Vis-à-vis de la source laser 21', le dispositif de séparation par polarisation 22' et les portions de trajet optique C1', C2' et C5' ont des fonctions identiques au dispositif de séparation par polarisation 22 et aux portions de trajet optique C1, C2 et C5 tels que décrits plus haut pour la source laser 21. Une lame semi-réfléchissante 31 a pour fonction de rendre la portion de trajet optique C3 commune aux faisceaux d'éclairage FE et FE'. Les portions de trajet optique C3 et C4 sont alors communes aux rayonnements rétrodiffusés RR et RR' qui sont générés respectivement par les deux sources laser 21 et 21'. Une autre lame semi-réfléchissante 32 a pour fonction de superposer les faisceaux de référence FR et FR', qui proviennent respectivement des deux sources laser 21 et 21'. De cette façon, les deux rayonnements rétrodiffusés RR et RR', ainsi que deux faisceaux de référence FR et FR', interfèrent sur la surface photosensible du capteur matriciel d'images 26. La référence 29 désigne un miroir de renvoi additionnel qui peut être utilisé dans la portion de trajet optique C5'. Les deux sources laser 21 et 21' sont activées ensemble continûment pendant la fabrication de la pièce 100. Dans ces conditions, chaque image holographique comprend les contributions d'image holographique suivantes :
- une première contribution d'image qui résulte de la superposition du faisceau de référence FR qui est issu de la source laser 21, avec le rayonnement rétrodiffusé RR qui est produit par le faisceau d'éclairage FE aussi issu de cette source laser 21. Cette première contribution d'image holographique est identique à celle qui a été décrite plus haut en liaison avec [Fig. 1], et comprend les trois composantes d'ordre 0, +1 et -1 avant filtrage ; et
- une deuxième contribution d'image qui résulte de la superposition du faisceau de référence FR' qui est issu de l'autre source laser 21', avec le rayonnement rétrodiffusé RR' qui est produit par le faisceau d'éclairage FE' aussi issu de cette autre source laser 21'. Cette deuxième contribution d'image holographique relève du même principe que la précédente, en étant transposée à la valeur de longueur d'onde de la source laser 21'. Elle comprend de même trois composantes d'ordre 0, +1 et -1 avant filtrage.

Les deux sources laser 21 et 21' peuvent être des diodes laser stabilisées, par exemple avec des longueurs d'onde d'émission qui peuvent être égales à 632,8 nm et 634,8 nm, respectivement. Une valeur de longueur d'onde synthétique λₛ, qui sera utile dans l'algorithme pour caractériser la topographie de la zone de transformation ZF, est égale à (λ·λ')/Δλ, où λ est la longueur d'onde d'émission de la source laser 21, λ' celle de la source laser 21', et Δλ est la valeur absolue de la différence entre λ et λ'.

Alors, chaque image holographique qui est saisie par le capteur matriciel 26 peut être analysée en exécutant l'algorithme perfectionné suivant par le processeur 27 :
- calculer en premier lieu la transformation de Fourier bidimensionnelle de l'image holographique, par rapport à ses deux coordonnées cartésiennes d'espace ;
- filtrer l'image transformée pour en extraire d'une part uniquement la composante d'ordre +1 de la contribution d'image qui est associée à la source laser 21, correspondant à la valeur de longueur d'onde λ, et la méthode est poursuivie comme indiqué plus haut dans le cas d'une source lumineuse de contrôle qui est unique, de façon à extraire des premières valeurs de phase ϕ₁(i, j) pour les points d'image de coordonnées i et j ;
- indépendamment, filtrer l'image transformée pour en extraire d'autre part uniquement la composante d'ordre +1 de la contribution d'image qui est associée à la source laser 21', correspondant à la valeur de longueur d'onde λ', et la méthode est répétée pour extraire des secondes valeurs de phase ϕ₂(i, j). Eventuellement, les deux filtrages peuvent isoler les composantes d'ordre -1, mais la même valeur d'ordre +1 ou -1 est à utiliser pour filtrer l'image transformée par rapport à chacune des deux sources laser 21 et 21' ;
- pour chaque point d'image (i, j), calculer la différence de valeurs de phases ϕ₁(i, j) - ϕ₂(i, j) ; puis
- utiliser les résultats des différences ϕ₁(i, j) - ϕ₂(i, j) en tant que valeurs de phase ϕ qui est associée au point d'image (i, j) et à la valeur de la longueur synthétique λₛ pour obtenir une nouvelle représentation tridimensionnelle de la zone de transformation ZF. Autrement dit, la nouvelle représentation tridimensionnelle de la zone de transformation ZF est obtenue par la formule : Δh=λₛ·Δ[ϕ₁(i, j) - ϕ₂(i, j)]/(4·π·cosθ), où Δ[ϕ₁(i, j) - ϕ₂(i, j)] est la variation du résultat qui est obtenu pour la différence de phases ϕ₁(i, j) - ϕ₂(i, j) entre deux points d'image différents, Δh étant la variation de valeur sagittale entre ces deux points d'image, et θ ayant la même signification que plus haut.

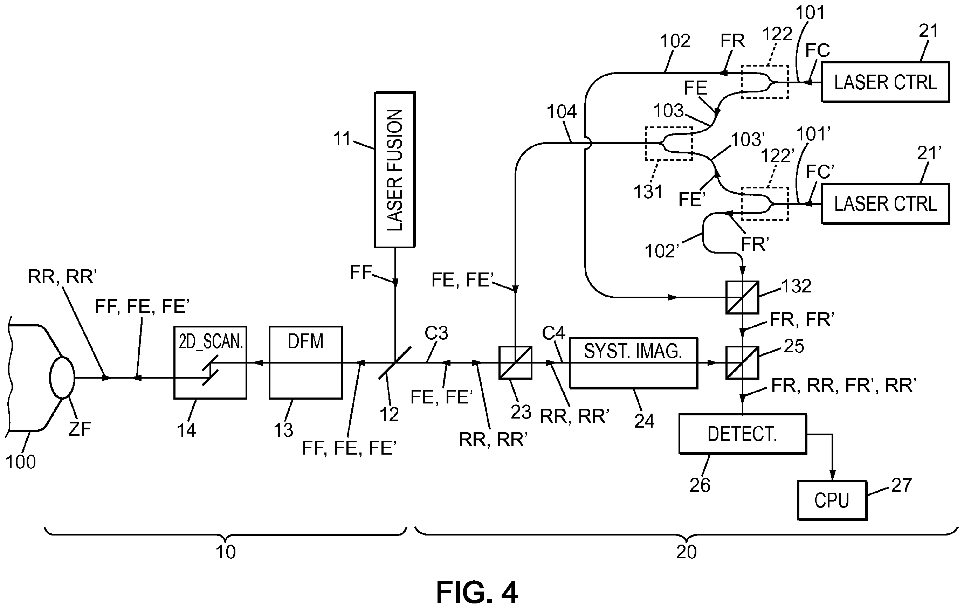

[Fig. 4] correspond à [Fig. 3] en utilisant des connexions à base de fibres optiques et de coupleurs optiques, pour relier les sorties optiques des sources laser de contrôle 21 et 21'. De préférence, les fibres et coupleurs utilisés sont monomodes et à maintien de polarisation. Ainsi, une fibre optique 101 relie la sortie optique de la source laser 21 à une entrée d'un coupleur 122, dont la fonction est similaire à celle du diviseur de faisceau 22. Une première sortie du coupleur 122 transmet alors le faisceau de référence FR à une fibre optique 102, qui conduit ce faisceau de référence FR à un cube semi-réfléchissant 132, dont la fonction est similaire à celle de la lame semi-réfléchissante 32. Simultanément, une fibre optique 101' relie la sortie optique de la source laser 21' à une entrée d'un coupleur 122', dont la fonction est similaire à celle du diviseur de faisceau 22'. Une première sortie du coupleur 122' transmet le faisceau de référence FR' à une fibre optique 102', qui conduit ce faisceau de référence FR' au cube semi-réfléchissant 132. Le cube semi-réfléchissant 132 transmet ainsi simultanément les deux faisceaux de référence FR et FR' au dispositif de séparation par division d'amplitude 25. Par ailleurs, une fibre optique 103 transmet le faisceau d'éclairage FE à partir d'une seconde sortie du coupleur 122 jusqu'à une première entrée d'un coupleur 50:50, désigné par la référence 131. De même, une fibre optique 103' transmet le faisceau d'éclairage FE' à partir d'une seconde sortie du coupleur 122' jusqu'à une seconde entrée du coupleur 131. Ce coupleur 131 possède une fonction similaire à celle de la lame semi-réfléchissante 31, et transmet en sortie les deux faisceaux d'éclairage FE et FE' conjointement au dispositif de séparation par polarisation 23, par une fibre optique 104. Une telle réalisation à base de fibres optiques permet de simplifier le dispositif de l'invention, et de réduire des perturbations d'alignement optique qui pourraient survenir entre certains composants optiques utilisés.

Il est entendu que l'invention peut être reproduite en modifiant des aspects secondaires des modes de réalisation qui ont été décrits en détail ci-dessus, tout en conservant certains au moins des avantages cités. Notamment, des composants optiques qui ont été décrits peuvent être remplacés par d'autres composants à fonctions équivalentes. Par exemple, l'une au moins des lames dichroïques qui ont été mentionnées peut être remplacée par un cube dichroïque placé au même endroit. De même, l'un au moins des dispositifs de séparation par polarisation peut être remplacé par un dispositif de séparation par division d'amplitude. En outre, l'invention peut être utilisée pour fabriquer des pièces en matériau céramique.

Enfin, toutes les valeurs numériques qui ont été citées ne l'ont été qu'à titre d'exemple, et peuvent être changées en fonction de chaque application de l'invention.

## Revendications

1. Dispositif de fabrication d'une pièce (100) avec ajout de matière, comprenant des moyens d'apport d'énergie adaptés pour transformer une quantité de matière à ajouter sur la pièce en cours de fabrication, dans une zone de transformation (ZF) de la matière qui est effective à un instant où ladite quantité de matière est fixée sur la pièce,
le dispositif de fabrication comprenant en outre des moyens optiques de contrôle (20) pour fournir au moins une représentation de la zone de transformation (ZF) en temps réel pendant que la pièce est fabriquée, lesdits moyens optiques de contrôle comprenant :
- au moins une source lumineuse de contrôle, adaptée pour produire un faisceau lumineux de contrôle (FC) ;
- un capteur matriciel d'images (26) ;
- un diviseur de faisceau (22), disposé pour diviser le faisceau lumineux de contrôle (FC) en un faisceau d'éclairage (FE) et un faisceau de référence (FR) ;
- un chemin optique d'éclairage, reliant le diviseur de faisceau (22) à la zone de transformation (ZF), continuellement pendant que la pièce (100) est fabriquée, et destiné au faisceau d'éclairage (FE) ;
- un chemin optique de référence, reliant le diviseur de faisceau (22) au capteur matriciel d'images (26), continuellement pendant que la pièce (100) est fabriquée, et destiné au faisceau de référence (FR) ; et
- un chemin optique de transfert, reliant la zone de transformation (ZF) au capteur matriciel d'images (26), continuellement pendant que la pièce (100) est fabriquée, et destiné à un rayonnement rétrodiffusé (RR) qui est produit par le faisceau d'éclairage (FE) lorsque ledit faisceau d'éclairage est incident sur la zone de transformation, ledit chemin optique de transfert étant adapté pour que le rayonnement rétrodiffusé forme une image de la zone de transformation sur le capteur matriciel d'images,
les moyens optiques de contrôle (20) étant disposés de sorte que le capteur matriciel d'images (26) produise, à chaque séquence de lecture dudit capteur matriciel d'images, des données de lecture qui correspondent à une superposition du rayonnement rétrodiffusé (RR) transmis par le chemin optique de transfert avec le faisceau de référence (FR) transmis par le chemin optique de référence,
chaque source lumineuse de contrôle étant une source laser (21), et les données de lecture du capteur matriciel d'images (26), pour chaque séquence de lecture dudit capteur matriciel d'images, formant une image holographique de la zone de transformation (ZF) qui est relative à un instant pendant que la pièce (100) est fabriquée,
les moyens optiques de contrôle (20) comprenant en outre au moins un processeur (27) adapté pour exécuter un algorithme d'extraction d'une répartition bidimensionnelle de phase à partir de l'image holographique, et de conversion de la répartition bidimensionnelle de phase en des valeurs numériques qui caractérisent une topographie de la zone de transformation (ZF), de façon à fournir une représentation tridimensionnelle de ladite zone de transformation,
le dispositif de fabrication étant de type fabrication additive par fusion sélective produite par laser sur lit de poudre, dans lequel les moyens d'apport d'énergie comprennent un laser de fusion (11) et une optique de focalisation adaptée pour focaliser sur la zone de transformation (ZF) un faisceau laser de fusion (FF) qui est produit par le laser de fusion, de façon à former sélectivement dans ladite zone de transformation, un bain de fusion à partir d'une poudre de la matière qui est destinée à constituer la pièce (100), et
le dispositif de fabrication étant **caractérisé en ce qu'**une partie au moins de l'optique de focalisation est disposée sur une portion commune au chemin optique d'éclairage et au chemin optique de transfert, de sorte que le faisceau d'éclairage (FE) soit incident sur la zone de transformation (ZF) après avoir traversé ladite partie de l'optique de focalisation, et le rayonnement rétrodiffusé (RR) traverse ladite partie de l'optique de focalisation en direction du capteur matriciel d'images (26).

2. Dispositif de fabrication selon la revendication 1, dans lequel le chemin optique d'éclairage est adapté en outre pour que, au niveau de la zone de transformation (ZF), une section du faisceau d'éclairage (FE) soit plus grande que la zone de transformation,
et le dispositif de fabrication est adapté pour que l'image holographique possède un champ optique d'entrée qui contienne la zone de transformation (ZF).

3. Dispositif de fabrication selon la revendication 1 ou 2, dans lequel la partie de l'optique de focalisation qui est disposée sur la portion commune au chemin optique d'éclairage et au chemin optique de transfert comprend un module optique de balayage bidimensionnel (14), de sorte que le faisceau laser de fusion (FF), le faisceau d'éclairage (FE) et le rayonnement rétrodiffusé (RR) soient déviés simultanément par le module optique de balayage bidimensionnel.

4. Dispositif de fabrication selon la revendication 3, dans lequel la partie de l'optique de focalisation qui est disposée sur la portion commune au chemin optique d'éclairage et au chemin optique de transfert comprend en outre un module optique à distance de focalisation variable (13), ledit module optique à distance de focalisation variable étant situé en amont du module optique de balayage bidimensionnel (14) pour le faisceau laser de fusion (FF) et le faisceau d'éclairage (FE), et étant effectif simultanément pour ledit faisceau laser de fusion, ledit faisceau d'éclairage et le rayonnement rétrodiffusé (RR).

5. Dispositif de fabrication selon l'une quelconque des revendications précédentes, dans lequel le chemin optique de transfert comprend au moins une première lentille convergente (24₁) et une seconde lentille convergente (24₂), disposées pour être traversées successivement par le rayonnement rétrodiffusé (RR) qui est produit par le faisceau d'éclairage (FE) lorsque ledit faisceau d'éclairage est incident la zone de transformation (ZF), et de sorte qu'un foyer image de la première lentille convergente soit superposé à un foyer objet de la seconde lentille convergente.

6. Dispositif de fabrication selon l'une quelconque des revendications précédentes, dans lequel le chemin optique de transfert comprend un filtre (12) adapté pour transmettre le rayonnement rétrodiffusé (RR) qui est produit par le faisceau d'éclairage (FE) lorsque ledit faisceau d'éclairage est incident sur la zone de transformation (ZF), sélectivement par rapport à du rayonnement thermique qui est émis par la zone de transformation.

7. Dispositif de fabrication selon l'une quelconque des revendications précédentes, dans lequel le faisceau de référence (FR) et le rayonnement rétrodiffusé (RR) forment une configuration d'holographie numérique dans un plan d'image, le faisceau de référence ayant en outre une configuration de faisceau collimaté au niveau du capteur matriciel d'images (26).

8. Dispositif de fabrication selon la revendication 7, dans lequel le faisceau de référence (FR) et une direction centrale de propagation du rayonnement rétrodiffusé (RR) forment un angle non-nul au niveau du capteur matriciel d'images (26), et l'algorithme qui est exécuté par le processeur (27) est adapté pour caractériser la topographie de la zone de transformation (ZF) à partir d'une seule valeur d'ordre holographique choisie entre +1 ou -1, ou à partir des deux valeurs d'ordre holographique +1 et -1.

9. Dispositif de fabrication selon l'une quelconque des revendications 1 à 8, dans lequel les moyens optiques de contrôle (20) comprennent au moins deux sources lumineuses de contrôle, formées par des sources laser (21, 21') respectives ayant des longueurs d'onde différentes mais qui présentent entre elles un écart inférieur à 2% de chacune desdites longueurs d'onde,
les moyens optiques de contrôle (20) étant disposés de sorte que les deux sources lumineuses de contrôle éclairent simultanément la zone de transformation (ZF),
chaque source lumineuse de contrôle étant associée à un chemin optique de référence respectif, et des chemins optiques de transfert, de préférence un chemin optique de transfert commun, étant fonctionnels simultanément pour les deux sources lumineuses de contrôle entre la zone de transformation (ZF) et le capteur matriciel d'images (26),
et l'algorithme qui est exécuté par le processeur (27) est adapté en outre pour isoler dans l'image holographique, des composantes d'image qui sont formées chacune par le rayonnement rétrodiffusé (RR, RR') et le faisceau de référence (FR, FR') provoqués par une même des deux sources lumineuses de contrôle, une composante d'image séparément pour chaque source lumineuse de contrôle, et les deux composantes d'image isolées correspondant à une même valeur d'ordre holographique égale à +1 ou -1 ;
et l'algorithme est en outre adapté pour extraire, pour chacun d'une multitude de points d'image de l'image holographique, deux valeurs de phases séparément à partir des deux composantes d'image isolées, puis calculer une différence entre les deux valeurs de phases pour chaque point d'image, et caractériser la topographie de la zone de transformation (ZF) en associant des résultats des différences de valeurs de phases à une valeur de longueur d'onde synthétique qui est égale au produit des deux longueurs d'onde des sources lumineuses de contrôle, divisé par une valeur absolue d'une différence entre lesdites deux longueurs d'onde.

## Patentansprüche

1. Vorrichtung zur Herstellung eines Werkstücks (100) mit Materialzugabe, umfassend Mittel zur Energiezufuhr, die dazu ausgebildet sind, eine Menge an Material, die auf dem herzustellenden Werkstück zugegeben werden soll, in einem Bereich der Umwandlung (ZF) des Materials umzuwandeln, die zu einem Zeitpunkt wirksam ist, an dem die Menge an Material auf dem Werkstück befestigt ist,
wobei die Herstellungsvorrichtung ferner optische Kontrollmittel (20) umfasst, um wenigstens eine Darstellung des Umwandlungsbereichs (ZF) in Echtzeit bereitzustellen, während das Werkstück gefertigt wird, wobei die optischen Kontrollmittel umfassen:
- wenigstens eine Kontrolllichtquelle, die dazu geeignet ist, einen Kontrolllichtstrahl (FC) zu erzeugen;
- einen Bildmatrixsensor (26);
- einen Strahlteiler (22), der dazu angeordnet ist, den Kontrolllichtstrahl (FC) in einen Beleuchtungsstrahl (FE) und einen Referenzstrahl (FR) zu teilen;
- einen Beleuchtungslichtweg, der den Strahlteiler (22) mit dem Umwandlungsbereich (ZF) kontinuierlich verbindet, während das Werkstück (100) hergestellt wird, und für den Beleuchtungsstrahl (FE) bestimmt ist;
- einen Referenzlichtweg, der den Strahlteiler (22) mit dem Bildmatrixsensor (26) kontinuierlich verbindet, während das Werkstück (100) hergestellt wird, und für den Referenzstrahl (FR) bestimmt ist; und
- einen optischen Übertragungsweg, der den Umwandlungsbereich (ZF) mit dem Bildmatrixsensor (26) kontinuierlich verbindet, während das Werkstück (100) hergestellt wird, und für eine Rückstreustrahlung (RR) bestimmt ist, die durch den Beleuchtungsstrahl (FE) erzeugt wird, wenn der Beleuchtungsstrahl auf dem Umwandlungsbereich auftrifft, wobei der optische Übertragungsweg derart ausgebildet ist, dass die rückgestreute Strahlung ein Bild des Umwandlungsbereichs auf dem Bildmatrixsensor bildet,
wobei die optischen Kontrollmittel (20) derart angeordnet sind, dass der Bildmatrixsensor (26) bei jeder Auslesesequenz des Matrixbildsensors Auslesedaten erzeugt, die einer Überlagerung der durch den optischen Übertragungsweg übertragenen Rückstreustrahlung (RR) mit dem durch den optischen Referenzweg übertragenen Referenzstrahl (FR) entsprechen,
wobei jede Kontrolllichtquelle eine Laserquelle (21) ist, und die Auslesedaten des Bildmatrixsensors (26) für jede Auslesesequenz des Bildmatrixsensors ein holographisches Bild des Umwandlungsbereichs (ZF) bilden, das sich auf einen Zeitpunkt während der Herstellung des Werkstücks (100) bezieht,
wobei die optischen Kontrollmittel (20) ferner wenigstens einen Prozessor (27) umfassen, der dazu ausgebildet ist, einen Algorithmus zum Extrahieren einer zweidimensionalen Phasenverteilung aus dem holographischen Bild und zum Umwandeln der zweidimensionalen Phasenverteilung in numerische Werte, die eine Topographie des Umwandlungsbereichs (ZF) kennzeichnen, auszuführen, um eine dreidimensionale Darstellung des Umwandlungsbereichs zu liefern,
wobei die Herstellungsvorrichtung vom Typ der additiven Herstellung durch selektives Schmelzen ist, das durch einen Laser auf einem Pulverbett erzeugt wird, wobei die Mittel zur Energiezufuhr einen Schmelzlaser (11) und eine Fokussierungsoptik umfassen, die dazu ausgebildet ist, einen Schmelzlaserstrahl (FF), der durch den Schmelzlaser erzeugt wird, auf den Umwandlungsbereich (ZF) zu fokussieren, um in dem Umwandlungsbereich selektiv ein Schmelzbad aus einem Pulver des Materials zu bilden, das dazu bestimmt ist, das Werkstück (100) zu bilden, und
wobei die Herstellungsvorrichtung **dadurch gekennzeichnet ist, dass** wenigstens ein Teil der Fokussierungsoptik auf einem gemeinsamen Abschnitt des Beleuchtungsstrahlengangs und des Übertragungsstrahlengangs angeordnet ist, so dass der Beleuchtungsstrahl (FE) auf dem Umwandlungsbereich (ZF) einfällt, nachdem er den Teil der Fokussierungsoptik durchquert hat, und die Rückstreustrahlung (RR) den Teil der Fokussierungsoptik in Richtung des Bildmatrixsensors (26) durchquert.

2. Herstellungsvorrichtung nach Anspruch 1, wobei der Beleuchtungsstrahlengang ferner derart ausgebildet ist, dass an dem Umwandlungsbereich (ZF) ein Abschnitt des Beleuchtungsstrahls (FE) größer ist als der Umwandlungsbereich,
und die Herstellungsvorrichtung derart ausgebildet ist, dass das holographische Bild ein optisches Eingangsfeld aufweist, das den Umwandlungsbereich (ZF) umfasst.

3. Herstellungsvorrichtung nach Anspruch 1 oder 2, wobei der Teil der Fokussierungsoptik, der auf dem gemeinsamen Abschnitt des Beleuchtungsstrahlengangs und des Übertragungsstrahlengangs angeordnet ist, ein zweidimensionales optisches Abtastmodul (14) umfasst, so dass der Schmelzlaserstrahl (FF), der Beleuchtungsstrahl (FE) und die Rückstreustrahlung (RR) gleichzeitig von dem zweidimensionalen optischen Abtastmodul abgelenkt werden.

4. Herstellungsvorrichtung nach Anspruch 3, wobei der Teil der Fokussierungsoptik, der auf dem gemeinsamen Abschnitt des Beleuchtungsstrahlengangs und des Übertragungsstrahlengangs angeordnet ist, ferner ein optisches Modul (13) mit variabler Brennweite umfasst, wobei das optische Modul mit variabler Brennweite für den Schmelzlaserstrahl (FF) und den Beleuchtungsstrahl (FE) vor dem optischen Modul (14) zur zweidimensionalen Abtastung angeordnet ist und gleichzeitig für den Schmelzlaserstrahl, den Beleuchtungsstrahl und die Rückstreustrahlung (RR) wirksam ist.

5. Herstellungsvorrichtung nach einem der vorhergehenden Ansprüche, wobei der optische Übertragungsweg wenigstens eine erste Sammellinse (24₁) und eine zweite Sammellinse (24₂) umfasst, die derart angeordnet sind, dass sie nacheinander von der Rückstreustrahlung (RR) durchquert werden, die von dem Beleuchtungsstrahl (FE) erzeugt wird, wenn der Beleuchtungsstrahl auf den Umwandlungsbereich (ZF) fällt, und so, dass ein Bildfokus der ersten Sammellinse mit einem Objektfokus der zweiten Sammellinse überlagert wird.

6. Herstellungsvorrichtung nach einem der vorhergehenden Ansprüche, wobei der optische Übertragungsweg einen Filter (12) umfasst, der dazu ausgebildet ist, Rückstreustrahlung (RR), die von dem Beleuchtungsstrahl (FE) erzeugt wird, wenn der Beleuchtungsstrahl auf den Umwandlungsbereich (ZF) auftrifft, selektiv in Bezug auf Wärmestrahlung, die von dem Umwandlungsbereich abgegeben wird, durchzulassen.

7. Herstellungsvorrichtung nach einem der vorhergehenden Ansprüche, wobei der Referenzstrahl (FR) und die Rückstreustrahlung (RR) in einer Bildebene ein digitales Holografiemuster bilden, wobei der Referenzstrahl am Bildmatrixsensor (26) ferner ein kollimiertes Strahlmuster aufweist.

8. Herstellungsvorrichtung nach Anspruch 7, wobei der Referenzstrahl (FR) und eine zentrale Ausbreitungsrichtung der Rückstreustrahlung (RR) an dem Bildmatrixsensor (26) einen Winkel ungleich Null bilden und der Algorithmus, der von dem Prozessor (27) ausgeführt wird, dazu ausgebildet ist, die Topographie des Umwandlungsbereichs (ZF) anhand eines einzelnen holographischen Ordnungswerts, der zwischen +1 oder -1 gewählt ist, oder anhand der beiden holographischen Ordnungswerte +1 und -1 zu charakterisieren.

9. Herstellungsvorrichtung nach einem der Ansprüche 1 bis 8, wobei die optischen Kontrollmittel (20) wenigstens zwei Kontrolllichtquellen umfassen, die von jeweiligen Laserquellen (21, 21') gebildet werden, die unterschiedliche Wellenlängen haben, aber untereinander einen Abstand von weniger als 2% jeder dieser Wellenlängen aufweisen,
wobei die optischen Kontrollmittel (20) derart angeordnet sind, dass die beiden Kontrolllichtquellen gleichzeitig den Umwandlungsbereich (ZF) beleuchten, wobei jeder Kontrolllichtquelle ein jeweiliger Referenzlichtweg zugeordnet ist, und optische Übertragungswege, bevorzugt ein gemeinsamer optischer Übertragungsweg, zugeordnet sind, für beide Kontrolllichtquellen zwischen dem Umwandlungsbereich (ZF) und dem Bildmatrixsensor (26) gleichzeitig funktionsfähig sind, und
der Algorithmus, der von dem Prozessor (27) ausgeführt wird, ferner dazu ausgebildet ist, in dem holographischen Bild Bildkomponenten zu isolieren, die jeweils durch die Rückstreustrahlung (RR, RR') und den Referenzstrahl (FR, FR') gebildet werden, die von einer gleichen der beiden Kontrolllichtquellen verursacht werden, eine Bildkomponente separat für jede Kontrolllichtquelle, wobei die beiden isolierten Bildkomponenten einem gleichen holographischen Ordnungswert gleich +1 oder -1 entsprechen, und
der Algorithmus ferner dazu geeignet ist, für jeden einer Vielzahl von Bildpunkten des holographischen Bildes zwei Phasenwerte separat aus den beiden isolierten Bildkomponenten zu extrahieren, dann eine Differenz zwischen den beiden Phasenwerten für jeden Bildpunkt zu berechnen, und die Topographie des Umwandlungsbereichs (ZF) zu charakterisieren, indem Ergebnisse der Differenzen der Phasenwerte einem synthetischen Wellenlängenwert zugeordnet werden, der gleich dem Produkt der beiden Wellenlängen der Kontrolllichtquellen, geteilt durch einen Absolutwert einer Differenz zwischen den beiden Wellenlängen, ist.

## Claims

1. A manufacturing device for manufacturing a piece (100) with addition of material, comprising energy supply means adapted to transform a quantity of material to be added to the piece being manufactured, within a transformation zone (ZF) of the material which is effective at a time when said quantity of material is being fixed to the piece,
the manufacturing device further comprising optical inspection means (20) for providing at least one representation of the transformation zone (ZF) in real time while the piece is being manufactured, said optical inspection means comprising:
- at least one inspection light source, adapted for producing an inspection light beam (FC);
- an image sensor array (26);
- a beamsplitter (22), arranged to split the inspection light beam (FC) into an illuminating beam (FE) and a reference beam (FR);
- an illumination optical path, continually connecting the beamsplitter (22) to the transformation zone (ZF) while the piece (100) is being manufactured, and intended for the illuminating beam (FE);
- a reference optical path, continually connecting the beamsplitter (22) to the image sensor array (26) while the piece (100) is being manufactured, and intended for the reference beam (FR); and
- a transfer optical path, continually connecting the transformation zone (ZF) to the image sensor array (26) while the piece (100) is being manufactured, and intended for the backscattered radiation (RR) that is produced by the illuminating beam (FE) when said illuminating beam is incident onto the transformation zone, said transfer optical path being adapted so that the backscattered radiation forms an image of the transformation zone on the image sensor array,
the optical inspection means (20) being arranged so that the image sensor array (26) produces, for each readout sequence of said image sensor array, readout data which correspond to a superposition of the backscattered radiation (RR) transmitted by the transfer optical path with the reference beam (FR) transmitted by the reference optical path,
each inspection light source being a laser source (21), and the readout data from the image sensor array (26), for each readout sequence of said image sensor array, forming a holographic image of the transformation zone (ZF) which relates to a time when the piece (100) is being manufactured,
the optical inspection means (20) further comprising at least one processor (27) adapted for executing an algorithm for extracting a two-dimensional phase distribution from the holographic image, and converting the two-dimensional phase distribution into numerical values which characterize a topography of the transformation zone (ZF), so as to provide a three-dimensional representation of said transformation zone,
the manufacturing device being of additive manufacturing type using selective melting produced by laser onto powder bed, wherein the energy supply means comprise a fusion laser (11) and focusing optics adapted for focusing, on the transformation zone (ZF), a fusion laser beam (FF) produced by the fusion laser, so as to form selectively in said transformation zone, a melt pool from a powder of the material that is intended to form the piece (100), and
the manufacturing device being **characterized in that** at least part of the focusing optics is arranged on a portion common to the illumination optical path and to the transfer optical path, so that the illuminating beam (FE) is incident onto the transformation zone (ZF) after having passed through said part of the focusing optics, and the backscattered radiation (RR) passes through said part of the focusing optics in the direction of the image sensor array (26).

2. The manufacturing device according to claim 1, wherein the illumination optical path is further adapted so that, at the transformation zone (ZF), a cross-sectional area of the illuminating beam (FE) is larger than the transformation zone,
and the manufacturing device is adapted so that the holographic image has an entrance optical field of view which contains the transformation zone (ZF).

3. The manufacturing device according to claim 1 or 2, wherein the part of the focusing optics which is arranged on the portion common to the illumination optical path and to the transfer optical path comprises a two-dimensional scanning optical module (14), so that the fusion laser beam (FF), the illuminating beam (FE), and the backscattered radiation (RR) are simultaneously deflected by the two-dimensional scanning optical module.

4. The manufacturing device according to claim 3, wherein the part of the focusing optics which is arranged on the portion common to the illumination optical path and to the transfer optical path further comprises a dynamic focus optical module (13), said dynamic focus optical module being located upstream of the two-dimensional scanning optical module (14) for the fusion laser beam (FF) and the illuminating beam (FE), and being effective simultaneously for said fusion laser beam, said illuminating beam, and the backscattered radiation (RR).

5. The manufacturing device according to any one of the preceding claims, wherein the transfer optical path comprises at least a first converging lens (24₁) and a second converging lens (24₂), which are arranged to be successively traversed by the backscattered radiation (RR) produced by the illuminating beam (FE) when said illuminating beam is incident onto the transformation zone (ZF), and so that an image focus point of the first converging lens is superimposed on an object focus point of the second converging lens.

6. The manufacturing device according to any one of the preceding claims, wherein the transfer optical path comprises a filter (12) adapted for transmitting the backscattered radiation (RR) produced by the illuminating beam (FE) when said illuminating beam is incident onto the transformation zone (ZF), selectively with respect to thermal radiation emitted by the transformation zone.

7. The manufacturing device according to any one of the preceding claims, wherein the reference beam (FR) and the backscattered radiation (RR) form a digital holography configuration in an image plane, the reference beam further having a collimated beam configuration at the image sensor array (26).

8. The manufacturing device according to claim 7, wherein the reference beam (FR) and a central direction of propagation of the backscattered radiation (RR) form a non-zero angle at the image sensor array (26),
and the algorithm that is executed by the processor (27) is adapted to characterize the topography of the transformation zone (ZF) from a single holographic order value selected among +1 or -1, or from both holographic order values +1 and -1.

9. The manufacturing device according to any one of claims 1 to 8, wherein the optical inspection means (20) comprise at least two inspection light sources, formed by respective laser sources (21, 21') having different wavelengths but with a difference between them that is less than 2% of each of said wavelengths,
the optical inspection means (20) being arranged so that both inspection light sources simultaneously illuminate the transformation zone (ZF),
each inspection light source being associated with a respective reference optical path, and transfer optical paths, preferably a common transfer optical path, being functional simultaneously for the two inspection light sources between the transformation zone (ZF) and the image sensor array (26),
and the algorithm that is executed by the processor (27) is furthermore adapted for isolating, in the holographic image, image components which are each formed by the backscattered radiation (RR, RR') and the reference beam (FR, FR') caused by a same one of the two inspection light sources, one image component separately for each inspection light source, and the two isolated image components correspond to a same holographic order value which is equal to +1 or -1;
and the algorithm is furthermore adapted for separately extracting two phase values, for each of a multitude of image points of the holographic image, from both isolated image components, then calculating a difference between the two phase values for each image point, and characterizing the topography of the transformation zone (ZF) by associating results of the differences in phase values with a synthetic wavelength value which is equal to the product of the two wavelengths of the inspection light sources, divided by an absolute value of a difference between said two wavelengths.
